# EUROPEAN PATENT SPECIFICATION

(11) **EP 1 220 878 B1**
(45) Date of publication and mention of the grant of the patent: **02.08.2006**
(21) Application number: 00955702.6
(22) Date of filing: 18.08.2000
(51) Int. Cl.: C08L 83/04, B29C 73/16, B29C 73/22

(54) **SELF-SEALING SILICONES FLUIDS**
SELBSTDICHTENDE SILIKONFLÜSSIGKEITEN
FLUIDES DE SILICONES AUTO-OBTURANTS

(30) Priority: 23.08.1999 US 150321 P
(43) Date of publication of application: 10.07.2002
(73) Proprietor: GENERAL ELECTRIC COMPANY, Schenectady, NY 12345 (US)
(72) Inventor: HORNE, Adam, J., Huntington Beach CA.92648 (US); JOHNSON, Donald, S., Scotia, NY 12302 (US); KILGOUR, John, Alfred, Clifton Park, NY 12065 (US); TRAVER, Frank, John, Troy, NY 12180 (US)
(74) Representative: Szary, Anne Catherine
(86) International application number: PCT/US2000/022704
(87) International publication number: WO 2001/014476

(56) References cited:
- EP-A- 0 827 983
- WO-A-99/51712
- US-A- 4 987 169
- US-A- 5 654 362
- US-A- 5 854 336
- US-A- 5 929 162

## Description

### FIELD OF THE INVENTION

The invention relates to the use as a self-sealing fluid of a composition comprising a polysiloxane fluid and an elastomeric silicone composition having a unique particle size distribution.

### BRIEF DESCRIPTION OF THE RELATED ART

Elastomeric polysiloxane particles are produced using a wide variety of methods known in the art. Examples of patents on the preparation of elastomeric polysiloxanes include: U.S. 4,970,252, U.S. 5,760,116, U.S. 4,340,709, U.S. 3,436,366, U.S. 5,654,362, U.S. 4,172,101, U.S. 5,811,487, U.S. 5,880,210 and U.S. 5,987,169.

EP-A-0827983 discloses a composition comprising the hydrosilylation addition product of a linear alkenyl functionalized polyorganosiloxane and an M^{H}Q resin and a low molecular weight silicone when subjected to shearing provides components in personal care formulations that have improved spreadability and substance.

US-A-5854336 discloses a process for preparing a silicone elastomer composition for cosmetic products which includes the steps of feeding the silicone elastomer composition comprising a silicone rubber in a carrier fluid into a reactor, mixing the composition in the reactor, delivering the composition from the reactor into a high pressure pump, pumping the fluid into a device for reducing particles of rubber into smaller sizes and recirculating the resultant size reduced particles back to the reactor.

US-A-4987169 discloses a method of preparing a uniform silicone composition, comprising treating under the application of a shearing force a polymeric product obtained by addition polymerization of (A) an organhydrogenpolysiloxane containing in its molecule from 1.5 to 5 silicon-bonded hydrogen atoms on average, said silicon-bonded hydrogen atoms being in an amount of from 1 to 20 mol % based on the total of the silicon-bonded hydrogen atoms and silicon-bonded organic groups in the molecule; and (B) an organopolysiloxane containing in its molecule from 1.5 to 5 silicon-bonded aliphatic unsaturated groups on average; in the presence of from 10 to 1,000 parts by weight of low-viscosity silicone oil having a viscosity of not more than 100 cSt at 25°C based on 100 parts by weight of the total amount of said (A) and (B).

US-A-5929162 discloses a composition comprising the hydrosilylation addition product of a linear alkenyl functionalized polyorganosiloxane and an M^{H}Q resin and a low molecular weight silicone when subjected to a particle size reduction process that includes flow induced shearing provides for components in personal care formulations that have improved spreadability and substance as a consequence of a unique particle size distribution.

US-A-5654362 discloses silicone gels are made by reacting an SI-H containing polysiloxane with an alpha, omega-diene. The reaction is conducted in the presence of a platinum catalyst and in the presence of a low molecular weight silicone oil. The reaction is continued until a gel is formed by crosslinking and addition of Si-H across double bonds in the alpha, omega-diene. The silicone gel can then be crumbled into a silicone powder using mechanical force. When additional amounts of low molecular weight silicone oil are added to the gel, and the silicone oil and the gel are subjected to shear force, a silicone paste can be formed.

The present invention provides the use as a self-sealing fluid of a silicone fluid composition comprising
(a) a silicone fluid having the formula MDₙM,
   wherein M is R₃SiO_{1/2},
   D is R¹₂SiO_{2/2},
   wherein R and R¹ are each one to ten carbon atom monovalent hydrocarbon radicals, and 'n' is an integer from 0 to 500,000 whereby the viscosity of the polysiloxane fluid is from 0.5 mm²/s (centistokes) to 750,000 mm²/s (centistokes) at 25°C; and
(b) crosslinked elastomeric silicone particles dispersed in said fluid, wherein the particle size of the elastomeric silicone is from 50 to 1000 µm (microns).

### SUMMARY OF THE INVENTION

The present invention may be used in a self-sealing fluid container system which comprises:
(a) a wall having a substantially continuous inner surface;
(b) a fluid contained by the inner surface; and
(c) elastomeric silicone particles dispersed or suspended in the fluid,
whereby if the wall develops a break or hole, then the elastomeric silicone particles self-seal the container system by preventing the fluid from flowing through the hole in the wall.

The container may additionally comprise a substantially continuous adhesive seal wherein the seal contains the fluid. The container system may also be such that the inner surface defines a volume, and the fluid is contained within the volume, for example, in a bag.

As used herein, "substantially continuous" means no breaks, tears, holes or punctures that are measurable.

### DETAILED DESCRIPTION OF THE INVENTION

The self-sealing container system can be any container comprising walls that are impermeable to fluids and have inner and outer surfaces. The walls may be rigid or flexible, although flexible walls that bend and are adaptable to different shapes are preferred. The wall thickness is not important, although walls that are at least 25.4 µm (0.001 inches) in thickness are preferred. Examples of materials used in the construction of the containers are: urethane, polypropylene, polyethylene, and various high performance engineered thermoplastics. These containers occasionally have small holes in them that are the result of the manufacturing process, some force on the wall that creates a hole extending from the inner surface to the outer surface, or small breaks or discontinuities in the adhesive seal of the container, through which fluid can flow. The holes are sometimes created during the filling of the containers, during routine manufacturing operations or during normal wear and abuse depending on the application.

In a first preferred embodiment, the elastomeric silicone particles of the present invention comprise from about 0.2 to about 95 percent by weight, more preferably from about 0.5 to about 50 percent and even more preferably from about 1 to about 10 percent, of the total silicone fluid compound, depending on the desired fluid viscosity. The particle size of the elastomeric particles used in the composition are from 50 to 1000 µm (microns), more preferably from 60 to 500 µm (microns) and even more preferably from 80 to 300 µm (microns), depending on the size of the hole to be filled.

As used herein, the term "elastomeric silicone" or "elastomeric polysiloxane" refers to crosslinked polysiloxanes.

Elastomeric polysiloxanes are made by known methods either neat, in situ or in an alternative solvent through polymerization and/or crosslinking of silicone components, potentially employing silicone or organic crosslinkers or chain extenders in conjunction with other silicone components, such as, for example, hydrosilylation polymerization of vinyl and hydridosiloxanes, either as homogeneous solutions or emulsions; condensation of silanols, alkoxysiloxanes or carboxysiloxanes; and free radical polymerization.

In a preferred embodiment, the elastomeric polysiloxane is prepared through hydrosilylation of a vinyl terminated siloxane with a silylhydride as crosslinking component, with a platinum catalyst in the presence of a cyclic siloxane solvent. In a highly preferred embodiment, the vinyl terminated siloxane is divinylpolysiloxane, the silylhydride is an MHQ resin averaging eight SiH units per molecule, and the cyclic siloxane solvent is decamethylcyclopentasiloxane.

The elastomeric polysiloxane may be reduced to a desired particle size through grinding, milling or any other form of particle shear known in the art.

The elastomeric polysiloxane particles used in the present invention can be added to a desired silicone fluid, where they are dispersed throughout the silicone fluid. The elastomeric silicone particles must be insoluble in the polysiloxane fluid, they must be solid particles, and they must remain suspended or dispersed in the fluid. As used herein, the terms "suspended" or "dispersed" mean that the elastomeric polysiloxane particles are uniformly spread throughout the liquid and do not settle out. In order to remain dispersed or suspended, the particles are preferably of a density that is compatible with the fluid to be used. The elastomeric particles are used to self-seal small leaks in applications where a sealed container may develop a small leak during production, filling or normal application, thus preventing the loss of fluid from the container. This will prevent rejection or failure of the containers. The elastomeric particles are generally smaller than the hole or break to be filled. In a preferred embodiment, the particles are approximately one-third the width of the diameter of the hole or break. In a highly preferred embodiment, the particle size of the elastomeric silicone particles is from 50 to 1000 µm (microns), and the amount of the elastomeric particles dispersed in the fluid is from 0.2 to 10 weight percent.

As used herein, "silicone fluid" means a polysiloxane fluid. The polysiloxane fluid may be any polysiloxane fluid that is compatible with the elastomeric silicone particles. Preferred polysiloxane fluids include: cyclicpolydimethylsiloxanes, cyclicpolydiphenylsiloxanes, polydimethylsiloxane, polymethylphenylsiloxanes, polydiphenylsiloxanes, alkyl substituted polydimethylsiloxane, polyether substituted siloxanes, alkoxy substituted polydimethylsiloxanes. In a preferred embodiment, the silicone fluid is polydimethylsiloxane, and the viscosity range of the fluid is 0.5 to 750,000 mm²/s (centistokes).

The self-sealing silicone fluid composition used comprises :
(a) a silicone fluid having the formula MDₙM,
   wherein M is R₃SiOi_{1/2},
   D is R¹₂SiO_{2/2},
   wherein R and R¹ are each one to ten carbon atom monovalent hydrocarbon radicals, and 'n' is an integer from 0 to 500,000 whereby the viscosity of the polysiloxane fluid is from 0.5 mm²/s (centristokes) to 750,000 mm²/s (centistokes) at 25°C; and
(b) elastomeric particles in said fluid which self-seal small holes or breaks in the adhesive in a self-sealing container system, wherein the particle size of the elastomeric silicone is from 50 to 1000 µm.

The self-sealing fluid may be obtained by a method comprising:
(a) producing an elastomeric silicone;
(b) reducing the elastomeric silicone to a desired particle size;
(c) dispersing the elastomeric silicone particles into the silicone fluid; and
The self sealing fluid dispersion may item be added to a container.

The self-sealing fluid of the present invention may be incorporated into other systems, or used alone, where the need to seal small holes in the container is important. The self sealing fluid may be used in articles formed comprising: a self-sealing container system comprising:
(a) a wall having a substantially continuous inner surface;
(b) a fluid contained by the inner surface; and
(c) elastomeric silicone particle dispersed or suspended in the polysiloxane fluid,
whereby if the wall develops a break or hole, then the elastomeric silicone particles self-seal the container system by preventing the fluid from flowing through the hole in the wall.

The self sealing fluid may be used in a system wherein the inner surface defines a volume, and the fluid is contained within the volume, for example, in a bag, a container holding an electronic control board or other container in which the fluid is completely contained. The article formed by the self-sealing container may also be such that the inner surface defines a volume and the fluid is contained within the volume.

One example of a self-sealing container is a modular housing for an automotive electronic control module. Self-sealing silicone fluids are particularly useful in electronic applications because they provide the desirable characteristics necessary for electronic component protection, such as moisture and contamination protection, flowability into small areas, good insulating properties and excellent heat transfer. Because the silicone fluid is self-sealing, small holes or cracks in the housing module or gaps in the gasket are automatically sealed and liquid is prevented from flowing out of the housing.

The following examples illustrate the present invention. They are illustrative and the claims are not to be construed as limited to the examples.

### Examples 1 and 2

The respective elastomeric polysiloxane particles of and Examples 1 and 2 of the present invention were each prepared through the hydrosilylation of a vinyl terminated siloxane (divinylpolysiloxane) with a MHQ silylhydride resin as a crosslinking component, using Karstedt's platinum catalyst in the presence of a cyclic siloxane solvent (decamethylcyclopentasiloxane). Divinylpolysiloxane.was.blended with the silylhydride in decamethylcyclopentasiloxane. The platinum catalyst was added and the reaction stirred and heated to 80°C to allow reaction and curing. The resulting material was diluted to 5.5 weight % elastomer content using polydimethylsiloxane having a viscosity of approximately 5 mm²/s (centistokes), and it was then subjected to shear using a Sonolator to obtain the desired particle size, as measured by a Malvern Particle Size analyzer (with the sample diluted in decamethylcyclopentasiloxane and isopropyl alcohol).

The material in Example 1 was further diluted in polydimethylsiloxane having a viscosity of approximately 1000 mm²/s (centistokes) to reach the desired final concentration of elastomeric silicone in the fluid. Approximately 300 grams of the material was added to a polyethylene plastic bag. A pinhole leak was put into the bag. Leakage was measured over a 14 day period.

The material in Example 2 was produced in a similar manner as that of Example 1. It was diluted to the desired final concentration of elastomeric silicone particles in decamethylcyclopentasiloxane, with the desired particle size. One quart of the material was placed in a sealable polyethylene plastic bag. A 1.57 mm (0.062 inch) diameter hole was punched in the bag. Leakage was measured over a 30 day period.

### Comparative Example

A comparative test was run using the same test used in examples 1 and 2. Polydimethylsiloxane having a viscosity of approximately 1000 mm²/s (centistokes) with no elastomeric silicone particles in the fluid was added to a urethane bag with a 1 millimeter diameter puncture hole in the bag to a height of at least one inch above the hole. Leakage was measured over a 24 hour period, and slightly over 3 grams of fluid leaked from the bag. By comparison, the fluid loss for the same test using a fluid with elastomeric silicone particles was less than 1 gram, over a 14 day and 30 day period.

The components described below and the relative amounts are set forth in TABLE I. The components used in the elastomeric polysiloxanes were as follows:
A Divinylpolysiloxane having a viscosity of approximately 40,000 mm²/s (centistokes);
B An MHQ resin silylhydride averaging eight SiH units per molecule;
C Decamethylcyclopentasiloxane;
D Karstedt's platinum catalyst.

**TABLE I**

| | Example 1 | Example 2 | Comparative Example |
|---|---|---|---|
| A (grams) | 2000 | 2000 | -- |
| B (grams) | 9.41 | 9.41 | -- |
| C (grams) | 6000 | 6000 | -- |
| D (ppm) | 5 | 5 | -- |
| Particle Size (µ) | 300 | 80 | No particles |
| Weight % Elastomer | 1.1 | 5.5 | 0 |
| Leakage (grams) | <0.2 | 0 | >3 |
| Hole size | pinhole | (0.062 in) 1.52 mm | 1 mm |
| Time (days) | 14 | 30 | 1 |

The compositions of Examples 1 and 2 were produced using the same method. Example 1 had a lower concentration of elastomeric particles having a larger particle size than the particles of Example 2. The comparative example had no particles; only a silicone fluid was in the bag.

### Example 3

A modular housing used for automotive electronic control modules was tested with the self-sealing silicone fluid of the present invention. A 1 mm hole was drilled in the housing, and the housing was then filled with a self-sealing silicone fluid (1 % silicone elastomer in 1000 mm²/s (centistokes) silicone fluid, as prepared above). After an initial drop of fluid due to direct pouring, the silicone fluid sealed the hole in the housing and no further silicone fluid passed through the hole.

## Claims

1. The use as a self-sealing fluid of a silicone fluid composition comprising
(a) a silicone fluid having the formula MDₙM,
wherein M is R₃SiO_{1/2},
D is R¹₂SiO_{2/2},
wherein R and R¹ are each one to ten carbon atom monovalent hydrocarbon radicals, and 'n' is an integer from 0 to 500,000 whereby the viscosity of the polysiloxane fluid is from 0.5 mm²/s (centistokes) to 750,000 mm²/s (centistokes) at 25°C; and
(b) crosslinked elastomeric silicone particles dispersed in said fluid, wherein the particle size of the elastomeric silicone is from 50 to 1000 µm (microns).

2. The use according to claim 1, wherein the amount of elastomeric silicone particles in the fluid is from 0.2 to 10 weight percent.

3. The use according to claim 1, wherein the silicon fluid (a) is polydimethylsiloxane.

4. The use according to claim 1, wherein the elastomeric silicone is produced through hydrosilylation of divinylpolysiloxane.

## Patentansprüche

1. Verwendung als selbstdichtende Flüssigkeit einer Silikonflüssigkeitszusammensetzung umfassend
(a) eine Silikonflüssigkeit mit der Formel MDₙM,
wobei M R₃SiO_{1/2} ist,
D R¹₂SiO_{2/2} ist,
worin R und R¹ jeweils monovalente Kohlenwasserstoffreste mit ein bis zehn Kohlenstoffatomen sind und 'n' eine ganze Zahl von 0 bis 500000 ist, wobei die Viskosität der Polysiloxanflüssigkeit zwischen 0,5 mm²/s (centistokes) und 750000 mm²/s (centistokes) bei 25°C ist; und
(b) vemetzte elastomere Silikonpartikel in der Flüssigkeit dispergiert, wobei die Partikelgröße der elastomeren Partikel zwischen 50 und 100 µm (microns) ist.

2. Verwendung nach Anspruch 1, wobei der Gehalt an elastomeren Silikonpartikeln in der Flüssigkeit von 0,2 bis 10 Gew.-% beträgt.

3. Verwendung nach Anspruch 1, wobei die Silikonflüssigkeit (a) Polydimethylsiloxan ist.

4. Verwendung nach Anspruch 1, wobei das elastomere Silikon durch Hydrosilylierung von Divinylpolysiloxan hergestellt wird.

## Revendications

1. Utilisation à titre de fluide auto-obturant d'une composition d'un fluide de silicone comprenant
(a) un fluide de silicone répondant à la formule MDₙM,
dans laquelle M représente R₃SiO_{1/2},
D représente R¹₂SiO_{2/2},
où R et R¹ représentent chacun des radicaux hydrocarbonés monovalents ayant un à dix atomes de carbone, et 'n' est un nombre entier valant de 0 à 500000, la viscosité du fluide de polysiloxane étant ainsi de 0,5 mm² / s (centistokes) à 750000 mm²/s (centistokes) à 25°C, et
(b) des particules de silicone élastomères réticulées dispersées dans ledit fluide, la taille des particules de la silicone élastomère étant de 50 à 1000 µm (microns).

2. Utilisation selon la revendication 1, dans laquelle la quantité des particules de silicone élastomères dans le fluide va de 0,2 à 10 pour-cent en poids.

3. Utilisation selon la revendication 1, dans laquelle le fluide de silicone (a) est un polydiméthylsiloxane.

4. Utilisation selon la revendication 1, dans laquelle la silicone élastomère est produite par hydrosilylation de divinylpolysiloxane.
